# EUROPÄISCHE PATENTSCHRIFT

(11) **EP 0 746 135 B1**
(45) Veröffentlichungstag und Bekanntmachung des Hinweises auf die Patenterteilung: **21.07.2004**
(21) Anmeldenummer: 96108343.3
(22) Anmeldetag: 24.05.1996
(51) Int. Cl.: H04M 15/00

(54) **Verfahren und System zur Überwachung der für Anrufe in einem Mobilfunksystem anfallenden Gebühren**
Method and system for monitoring call fees in a mobile radio system
Méthode et système de surveillance de facturation d'appel dans un système radio mobile

(30) Priorität: 30.05.1995 DE 19519766
(43) Veröffentlichungstag der Anmeldung: 04.12.1996
(73) Patentinhaber: SIEMENS AKTIENGESELLSCHAFT, 80333 München (DE)
(72) Erfinder: Dzuban, Stanislav, Dipl.-Ing., 1030 Wien (AT); Reininghaus, Georg, Dipl.-Ing., 1130 Wien (AT)

(56) Entgegenhaltungen:
- WO-A-92/16078
- WO-A-93/12606
- US-A- 5 109 401
- US-A- 5 291 543

## Beschreibung

Die Erfindung bezieht sich auf ein Verfahren zur Überwachung der für Anrufe in einem Mobilfunksystem anfallenden Gebühren.

Bekannt ist z.B. aus der WO9312606A eine Gebührenerwachung durch Überwachung der Gesprächsgebühren.

Es ist allgemein bekannt, in einem Fernsprechsystem die für Anrufe anfallenden Gebühren, die sich aus festen Monatsgebühren und/oder variablen Gesprächsgebühren zusammensetzen, abhängig von der jeweils genutzten Dienstleistung von den Teilnehmern zu erheben. Die Vergebührung erfolgt durch Barzahlung, durch Verwendung von Telefonkarten oder durch Abbuchung von einem Konto. In einem Mobilfunksystem werden die bei einem Anruf anfallenden Gebühren gemäß einer älteren Patentanmeldung DE 4412727 A1 in Realzeit ausgewertet und zur Abrechnung in einem Debitzentrum gesammelt. Dies verursacht eine erhebliche Signalisierungslast im Mobilfunksystem.

Die US 5109401 beschreibt ein Verfahren zur Überwachung der Anrufgebühren in einer Funkkommunikationseinrichtung, die an oder in einem mobilen Gegenstand angebracht ist. Dies bedeutet, dass das bekannte Verfahren sich auf die Berechnung und Überwachung der für einen Anruf anfallenden Gebühren in einer mobilen Funkteilnehmerstation beschränkt. Der Hauptzweck des bekannten Verfahrens besteht darin, den Benutzer der Funkteilnehmerstation darüber zu informieren, dass eine vorgegebene erlaubte Gebührengrenze durch seinen Anruf überschritten wird. Zum Erreichen dieses Ziels werden einzelne Gebührenbeträge derart berechnet, dass jeweils ein fester Gebührenteilbetrag (charge rate) pro Zeiteinheiten multipliziert wird. Die gesamte Anrufgebühr ergibt sich aus wiederholter Aufaddition der einzelnen Gebührenbeträge. Jedes Mal, wenn ein neuer Gebührenbetrag und somit eine neue Zwischensumme ermittelt ist, erfolgt ein Vergleich mit der erlaubten Gebührengrenze, sofern die Anrufverbindung noch besteht und die Gebührengrenze noch nicht erreicht ist. Dies bedeutet, dass bei dem bekannten Verfahren von der Verarbeitungseinheit die einzelnen Gesprächszeiten und die zugehörigen Gebührenteilbeträge fortlaufend ermittelt und die aus den bisherigen Gebührenbeträgen aufsummierte Anrufgebühr jeweils mit der erlaubten Gebührengrenze in einer Vielzahl von Teilschritten fortlaufend verglichen werden müssen.

Es ist wünschenswert, die Gebühren, die durch umgelenkte und/oder weitergeleitete Anrufe entstehen, zu begrenzen, da Mobilfunkteilnehmer sich auf Bestellung anrufen lassen, um die von einem Anrufer - beispielsweise aus einem fernen Land - gewünschte Zielnummer, zu der der Anruf umgelenkt oder weitergeleitet werden soll, zu aktivieren. Auf diese Weise tritt der Mobilfunkteilnehmer selbst als Vermittlungsstelle auf, so dass gegebenenfalls teuere Gespräche - beispielsweise internationale Gespräche längerer Zeitdauer - über ihn geführt werden, ohne dass eine Kontrolle über die Vergebührung von Seiten des Mobilfunksystembetreibers besteht. Zahlt der die Anrufumlenkung oder die Anrufweiterleitung in Anspruch nehmende Anrufer die Gebühren nicht, wird das Mobilfunksystem missbräuchlich genutzt. Wenn für Mobilfunkteilnehmer eine Anrufumlenkung (call forwarding) oder eine Anrufweiterleitung (call transfer) aktiv ist und jedes umgelenkte oder weitergeleitete Gespräch aus Überwachungsgründen an eine zentrale Stelle im Mobilfunksystem gemeldet werden muß, entsteht eine hohe Signalisierungslast.

Es ist daher Aufgabe der vorliegenden Erfindung, ein Verfahren und ein System zur Überwachung der für Anrufe in einem Mobilfunksystem anfallenden Gebühren anzugeben, mit dem eine einfache Gebührenüberwachung bei möglichst geringer Signalisierungslast durchführbar ist.

Diese Aufgabe wird gemäß der Erfindung durch die Merkmale des Patentanspruchs 1 hinsichtlich des Verfahrens und durch die Merkmale des Patentanspruchs 1 hinsichtlich des Sytems gelöst. Weiterbildungen der Erfindung sind in den Unteransprüchen angegeben.

Demnach werden für jeden einzelnen Anruf Vergebührungsdaten bereitgestellt und eine Gebührengrenze festgelegt, anhand der für den jeweiligen Anruf eine begrenzte Gesprächszeit berechnet wird. Parallel zur Begrenzung des Gesprächs auf eine bestimmte Zeitdauer wird bei jedem Anruf eine Überwachungsfunktion gestartet, durch die bei Ablauf der begrenzten Gesprächszeit der Anruf automatisch ausgelöst wird. Die Gebührengrenze stellt dabei eine Obergrenze für die bei dem Anruf anfallenden Gebühren dar, wobei die Gebührengrenze für alle Mobilfunkteilnehmer im Mobilfunksystem einheitlich oder für einzelne Mobilfunkteilnehmer individuell festgelegt werden kann. Durch die Überwachungsfunktion wird sichergestellt, daß die erlaubte Gesprächsdauer für jeden einzelnen Anruf nicht überschritten und damit ein Mißbrauch des Mobilfunksystems insbesondere bei umgelenkten oder weitergeleiteten Anrufen mit wenig Aufwand vermieden wird.

Die sich zusätzlich ergebende Signalisierungslast ist vernachlässigbar, da die Gebührengrenze und die Vergebührungsdaten wie Teilnehmerdaten des Mobilfunkteilnehmers behandelt werden können. Es müssen keine neuen Schnittstellen zur Überwachung der anfallenden Gebühren beim neuen Verfahren definiert werden, da die zur Berechnung der begrenzten Gesprächszeit notwendigen Parameter als Teilnehmerdaten in den vorhandenen Dateien des Mobilfunksystems gespeichert im bestehenden Signalisierungsprotokoll des Mobilfunksystems übertragen werden. Für den Mobilfunkteilnehmer besteht ein höherer Komfort, da eine unbeabsichtigte Überschreitung der Gebührengrenze während eines Anrufs ausgeschlossen ist und unkontrollierte teuere Gespräche vermieden werden können. Für den Mobilfunksystembetreiber bietet das erfindungsgemäße Verfahren den Vorteil, daß keine "Standleitung" zur mißbräuchlichen Nutzung existiert und Anrufe mit hohen Gebühren unüberwacht bleiben. Ein mehrfaches Überschreiten der in der Regel monatlich abzurechnenden Vergebührung ist durch die Festlegung einer begrenzten Gesprächszeit pro Anruf nicht mehr möglich.

Von Vorteil ist es, wenn bei einem von der Mobilstation ausgehenden bzw. in der Mobilstation eintreffenden Anruf die Gebührengrenze von einer Besucherdatei bereitgestellt und an eine Mobilvermittlungsstelle übertragen wird, die die begrenzte Gesprächszeit berechnet, die Überwachungsfunktion startet und nach dem Ablauf der begrenzten Gesprächszeit eine Auslösungsnachricht aussendet.

Besonders ist es von Vorteil, wenn das erfindungsgemäße Verfahren bei einer für den Mobilfunkteilnehmer eingerichteten Anrufumlenkung bzw. bei einer für den Mobilfunkteilnehmer eingerichteten Anrufweiterleitung angewendet wird. Die Gebührengrenze und die Umlenkungsdaten können abhängig von der Art der Anrufumlenkung ebenfalls von einer Besucherdatei bereitgestellt und an eine Mobilvermittlungsstelle übertragen werden, die die Berechnung der begrenzten Gesprächzeit, das Starten der Überwachungsfunktion und das Aussenden der Auslösungsnachricht automatisch bewirkt. Eine alternative Lösung für bestimmte Arten der Anrufumlenkung sieht vor, daß die Gebührengrenze und die Umlenkungsdaten von einer Heimatdatei bereitgestellt und an die Mobilvermittlungsstelle zur Veranlassung der weiteren Schritte einschließlich dem Aussenden der Auslösungsnachricht bei Ablauf der begrenzten Gesprächszeit ausgesendet werden.

Es ist auch insbesondere von Vorteil, wenn bei einer für den anrufenden Mobilfunkteilnehmer eingerichteten Anrufweiterleitung, bei der der Anruf von dem bereits ein Gespräch führenden Mobilfunkteilnehmer an einen dritten Teilnehmer weitergeschaltet wird, die Gebührengrenze und Weiterleitungsdaten ebenfalls von einer Besucherdatei bereitgestellt und an die zuständige Mobilvermittlungsstelle zur Veranlassung der weiteren Schritte übertragen werden.

Von Vorteil ist es auch, wenn vor Ablauf der berechneten begrenzten Gesprächszeit eine akustische oder visuelle Information über die bevorstehende Auslösungsnachricht ausgesendet wird. Eine Verlängerung der begrenzten Gesprächszeit ist möglich durch Aussenden einer Kurznachricht von der Mobilstation zur Mobilvermittlungsstelle oder durch Inanspruchnahme eines hierzu bereitgestellten Dienstes im Mobilfunksystem.

Ein Ausführungsbeispiel der Erfindung wird im folgenden anhand von Zeichnungen näher erläutert. Es zeigen
- Figur 1: ein Ablaufdiagramm für die Gebührenüberwachung bei einem von der Mobilstation abgehenden Anruf,
- Figur 2: ein Ablaufdiagramm für die Gebührenüberwachung bei einem in der Mobilstation eintreffenden Anruf,
- Figur 3: ein Ablaufdiagramm zur Gebührenüberwachung bei einer unbedingten Anrufumlenkung,
- Figur 4: ein Ablaufdiagramm zur Gebührenüberwachung bei einer Anrufumlenkung wegen besetztem Mobilfunkteilnehmer und
- Figur 5: ein Ablaufdiagramm zur Gebührenüberwachung bei einer Anrufweiterleitung.

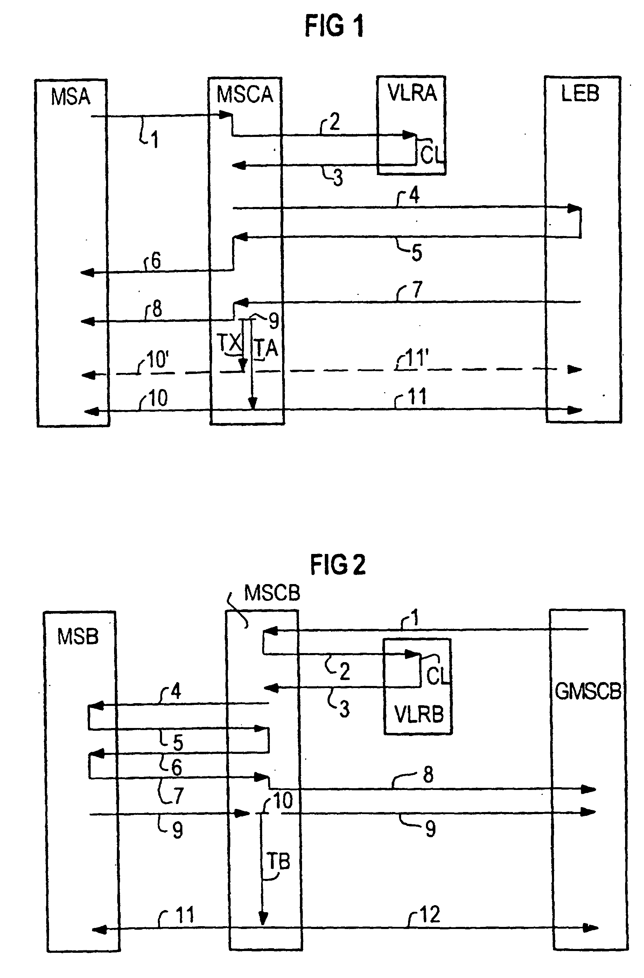

Figur 1 zeigt den Funktionsablauf zur Überwachung der in einem Mobilfunksystem anfallenden Gebühren bei einem von einer Mobilstation MSA abgehenden Anruf (Mobile Originated Call). Der Anruf wird von einem Mobilfunkteilnehmer durch Betätigen der Mobilstation MSA initiiert, über einen Funkübertragungskanal zu einer Basisstation und von dort über eine Verbindungsleitung zu einer Mobilvermittlungsstelle MSCA weitergeleitet. Mit der Mobilvermittlungsstelle MSCA ist eine Besucherdatei VLRA gekoppelt, in der die Teilnehmerdaten der von der Mobilvermittlungsstelle MSCA aktuell betreuten Mobilfunkteilnehmer vorübergehend gespeichert sind. Es sei angenommen, daß der angerufene Teilnehmer ein Festnetzteilnehmer eines anderen Kommunikationssystems - beispielsweise des öffentlichen Fernsprechsystems - ist, so daß durch den abgehenden Anruf eine Verbindung von der Mobilvermittlungsstelle MSCA zu einer für den angerufenen Festnetzteilnehmer vorgesehenen Vermittlungseinrichtung LEB des Fernsprechsystems aufgebaut wird.

Bevor die eigentliche Gesprächsverbindung bei dem von der Mobilstation MSA abgehenden Anruf aufgebaut werden kann, erfolgt die Zuteilung eines Funkübertragungskanals zwischen der Mobilstation MSA und der Basisstation sowie zwischen der Basisstation und der Mobilvermittlungsstelle MSCA. Die Mobilstation MSA sendet über einen Signalisierungskanal eine Diensteanforderung an die Mobilvermittlungsstelle MSCA, mit der Mobilitätsfunktionen, die beispielsweise die Authentifikation, die Verschlüsselung und/oder die Zuordnung einer temporären Mobilfunkteilnehmeridentifikationsnummer usw. umfaßt, angefordert werden.

Sobald die Mobilitätfunktionen erfolgreich durchgeführt und eine Meldung darüber an die Mobilstation MSA rückgemeldet ist, startet die Mobilstation MSA den Aufbau der eigentlichen Gesprächsverbindung mit Aussenden einer Nachricht an die Mobilvermittlungsstelle MSCA, in der der Aufbau der Verbindung gewünscht wird (1). Diese Nachricht zum Verbindungsaufbau enthält unter anderem die vom Mobilfunkteilnehmer gewählte Zielrufnummer des angerufenen Festnetzteilnehmers und Informationen über den angeforderten Dienst. Von der Mobilvermittlungsstelle MSCA werden die Teilnehmerdaten des Mobilfunkteilnehmers von der zugehörigen Besucherdatei VLRA angefordert (2). Anhand der gespeicherten Teilnehmerdaten kann die Berechtigung des Mobilfunkteilnehmers zur Nutzung des angeforderten Dienstes überprüft werden. Gemäß der Erfindung wird für den abgehenden Anruf eine Gebührengrenze CL, die vorzugsweise als Teilnehmerdatum individuell für den Mobilfunkteilnehmer in der Besucherdatei VLRA eingetragen ist, festgelegt und als Antwort auf die Anforderung der Teilnehmerdaten zur Mobilvermittlungsstelle MSCA übertragen (3). Darüber hinaus werden Vergebührungsdaten der Mobilvermittlungsstelle MSCA zur Verfügung gestellt, die beispielsweise als Daten zu einem für den Mobilfunkteilnehmer eingerichteten Zusatzdienst "Gebührenerfassung" (Advice of Charging) ebenfalls in der Besucherdatei VLRA eingetragen sind. Die Vergebührungsdaten bestehen beispielsweise aus mehreren Parametern, die gemäß einer für den GSM-Standard (Global System for Mobile Communication) festgelegten Formel zu einem Ergebnis über die anfallenden Gebühren verknüpft werden.

Von der Mobilvermittlungsstelle MSCA werden die Ziffern der gewählten Zielrufnummer ausgewertet, um eine Nachricht zum Verbindungsaufbau (Initial Address Message) in einem freien Übertragungskanal eines Übertragungsrahmens an die für den angerufenen Festnetzteilnehmer vorgesehene Vermittlungseinrichtung LEB auszusenden (4). Nach Empfang eines Anrufsignals von der Vermittlungseinrichtung LEB (5) informiert die Mobilvermittlungsstelle MSCA die Mobilstation MSA darüber, daß die Festnetzteilnehmerstation des angerufenen Festnetzteilnehmers das Anrufsignal ausgesendet hat (6). Das Anrufsignal kennzeichnet das Läuten der Teilnehmerstation des Festnetzteilnehmers. Sobald der Festnetzteilnehmer abhebt, wird eine entsprechende Nachricht von der Vermittlungseinrichtung LEB zur Mobilvermittlungsstelle MSCA übertragen (7) und von der Mobilvermittlungsstelle MSCA zur Mobilstation MSA übermittelt (8). Somit ist die Gesprächsverbindung zwischen der Festnetzteilnehmerstation und der Mobilstation MSA durchgeschaltet.

In der Regel beginnt in der Mobilvermittlungsstelle MSCA mit dem Empfang der Nachricht über den erfolgreichen Verbindungsaufbau zum angerufenen Festnetzteilnehmer die Gebührenerfassung. Gemäß der Erfindung wird von der Mobilvermittlungsstelle MSCA bei einem von der Mobilstation MSA abgehenden Anruf anhand der übermittelten Gebührengrenze CL und der Vergebührungsdaten für den jeweiligen Anruf eine begrenzte Gesprächszeit TA berechnet und eine Überwachungsfunktion gestartet (9). Die Überwachungsfunktion besteht im einfachsten Fall darin, einen Zeitgeber auf die begrenzte Gesprächszeit TA einzustellen. Die Gesprächsverbindung bleibt - sofern sie nicht vorher von einem der beiden Teilnehmer vorzeitig abgebrochen wird - maximal aufrechterhalten, bis die begrenzte Gesprächszeit TA abgelaufen ist. Bei Ablauf der erlaubten Gesprächszeit TA wird der Anruf durch Aussenden einer Auslösungsnachricht von der Mobilvermittlungsstelle MSCA zu der Mobilstation MSA (10) und/oder zu der Vermittlungseinrichtung LEB (11) automatisch beendet. Die für den Anruf angefallenen Gebühren werden gesammelt und einer Auswertung zur Abrechnung der Gebühren für den anrufenden Mobilfunkteilnehmer zugeführt. Kurz vor dem Ablauf der erlaubten Gesprächszeit TA, beispielsweise nach der vorgegebenen Zeit TX, kann der Mobilfunkteilnehmer oder der Festnetzteilnehmer oder beide Teilnehmer auf das baldige Ende der Gesprächsverbindung visuell oder akustisch aufmerksam gemacht werden, indem von der Mobilvermittlungsstelle MSCA eine Ansage oder eine Kurzmitteilung an die Mobilstation MSA (10') und/oder an die Vermittlungseinrichtung LEB (11') ausgesendet wird.

Die Gebührengrenze CL stellt eine Obergrenze für die bei einem einzelnen Anruf anfallenden Gebühren dar und kann für den Mobilfunkteilnehmer individuell - wie im vorliegenden Ausführungsbeispiel - oder vom jeweiligen Mobilfunksystembetreiber für alle Mobilfunkteilnehmer einheitlich definiert werden. Durch Berechnung einer erlaubten Gesprächszeit pro einzelnem Anruf und Überwachung der berechneten Gesprächszeit durch einen Zeitgeber wird sichergestellt, daß die Gebühren für den einzelnen Anruf die festgelegte Gebührengrenze nicht überschreiten. Die Begrenzung der Gesprächszeit direkt in der Mobilvermittlungsstelle vermeidet eine höhere Signalisierungslast, die bei Auswertung und Sammlung der für jedes einzelne Gespräch anfallenden Gebühren in Realzeit nötig wäre. Außerdem brauchen die Gespräche der Mobilfunkteilnehmer nicht systemweit zentral überwacht zu werden, um einen Mißbrauch des Mobilfunksystems zu entdecken, und die hierfür erforderliche erhebliche zusätzliche Signalisierungslast in Kauf genommen zu werden. Als Nebeneffekt des erfindungsgemäßen Verfahrens wird auch das Risiko des Mobilfunksystembetreibers und des Mobilfunkteilnehmers gesenkt, da lange und teure Gespräche außerhalb der Kontrolle des Mobilfunkteilnehmers und des Mobilfunksystembetreibers durch die Begrenzung der Gesprächszeit in der Mobilvermittlungsstelle ausgeschlossen werden können.

Figur 2 zeigt den Funktionsablauf zur Überwachung der anfallenden Gebühren bei einem in der Mobilstation eintreffenden Anruf (Mobile Terminated Call). Von einem Festnetzteilnehmer des Fernsprechsystems wird ein Anruf initiiert und die Teilnehmerrufnummer eines Mobilfunkteilnehmers über eine Vermittlungseinrichtung des Fernsprechsystems zu einer Zugangs-Mobilvermittlungsstelle GMSCB im Mobilfunksystem übermittelt. Die Zugangs-Mobilvermittlungsstelle GMSCB richtet eine Anfrage (Interrogation) an eine Heimatdatei, in der der Mobilfunkteilnehmer mit seinen Teilnehmerdaten registriert ist. Die Heimatdatei speichert Informationen über den momentanen Aufenthaltsort des angerufenen Mobilfunkteilnehmers, d.h. in welchem Aufenthaltsgebiet der Mobilfunkteilnehmer sich gerade befindet und welche Besucherdatei mit zugehöriger Mobilvermittlungsstelle für ihn aktuell zuständig ist. Von der Heimatdatei wird eine Signalisierungsverbindung zur Besucherdatei aufgebaut und eine Wegenummer (Mobile Subscriber Roaming Number) angefordert und empfangen. Diese Wegenummer wird von der Heimatdatei zur Zugangs-Mobilvermittlungsstelle GMSCB ausgesendet, die die über die Festnetzteilnehmerstation gewählte Teilnehmerrufnummer des angerufenen Mobilfunkteilnehmers durch die Wegenummer ersetzt und eine Auswertung der Ziffern der Wegenummer vornimmt, um eine Gesprächsverbindung zu der für den angerufenen Mobilfunkteilnehmer zuständigen Mobilvermittlungsstelle MSCB mit zugehöriger Besucherdatei VLRB herzustellen.

Dies bedeutet, daß von der Zugangs-Mobilvermittlungsstelle GMSCB eine Nachricht zum Verbindungsaufbau (Initial Adress Message), die unter anderem die Wegenummer enthält, zur Mobilvermittlungsstelle MSCB ausgesendet wird (1). Die auch als Besucher-Mobilvermittlungsstelle (Visited Mobile Switching Center) bezeichnete Mobilvermittlungsstelle MSCB informiert anhand der eintreffenden Wegenummer die Besucherdatei VLRB über den gewünschten Verbindungsaufbau zu der Mobilstation MSB des angerufenen Mobilfunkteilnehmers (2). Von der Besucherdatei VLRB werden Vergebührungsdaten und eine für den jeweils registrierten Mobilfunkteilnehmer individuell festgelegte Gebührengrenze CL zur Mobilvermittlungsstelle MSCB ausgesendet (3). Von der Mobilvermittlungsstelle MSCB wird eine Funkrufempfangs-Prozedur (Paging) zur Lokalisierung der Mobilstation MSB des angerufenen Mobilfunkteilnehmers gestartet. Dabei werden alle Basisstationen, die sich in einem bestimmten Aufenthaltsgebiet (Location Area) befinden, abgefragt. Die Basisstationen senden die Funkrufempfangs-Anforderung über ihre Funkschnittstellen aus, worauf die von dem eintreffenden Anruf betroffene Mobilstation MSB des angerufenen Mobilfunkteilnehmers eine Antwort auf die Anforderung zur Mobilvermittlungsstelle MSCB zurücksendet (5).

Nach erfolgreicher Durchführung von Mobilitätsfunktionen beginnt die Mobilvermittlungsstelle MSCB mit dem Aussenden einer Nachricht zum Verbindungsaufbau an die Mobilstation MSB (6). Von der Mobilstation MSB wird die Nachricht bestätigt und eine Nachricht mit einem Anrufsignal, das den Start der Gesprächsverbindung durch Betätigen der Mobilstation MSB signalisiert, zur Mobilvermittlungsstelle MSCB übertragen (7) und von der Mobilvermittlungsstelle MSCB zur Zugangs-Mobilvermittlungsstelle GMSCB weitergeleitet (8). Der anrufende Festnetzteilnehmer wird über das Anrufsignal durch seine Vermittlungseinrichtung informiert. Sobald der Mobilfunkteilnehmer die Gesprächsverbindung aufnimmt, erkennbar für den anrufenden Festnetzteilnehmer an der Übermittlung einer entsprechenden Nachricht von der Mobilstation MSB zur Mobilvermittlungsstelle MSCB, von ihr zur Zugangs-Mobilvermittlungsstelle GMSCB (9) und von dort zur Vermittlungseinrichtung und zur Fernsprechteilnehmerstation im Fernsprechsystem, beginnt in der Mobilvermittlungsstelle MSCB die Gebührenerfassung.

Von der Mobilvermittlungsstelle MSCB wird anhand der empfangenen Gebührengrenze CL und anhand der Vergebührungsdaten für den Anruf, der ein aus der Sicht des Mobilfunkteilnehmers in der Mobilstation MSB eintreffender Anruf ist, eine begrenzte Gesprächszeit TB berechnet und ein entsprechender Zeitgeber zur Überwachung der erlaubten Gesprächszeit gestartet (10). Wenn die berechnete Gesprächszeit abgelaufen ist, wird von der Mobilvermittlungsstelle MSCB der Anruf automatisch ausgelöst, indem eine Auslösungsnachricht zur Mobilstation MSB (11) und/oder zur Zugangs-Mobilvermittlungsstelle GMSCB (12) und von dort zur Festnetzteilnehmerstation des anrufenden Fernsprechteilnehmers ausgesendet wird. Eine vorherige visuelle oder akustische Information des jeweiligen Teilnehmers über das bevorstehende Ende der Gesprächsverbindung durch Erreichen der berechneten Gesprächszeit ist - in gleicher Weise wie zu Figur 1 beschrieben - möglich.

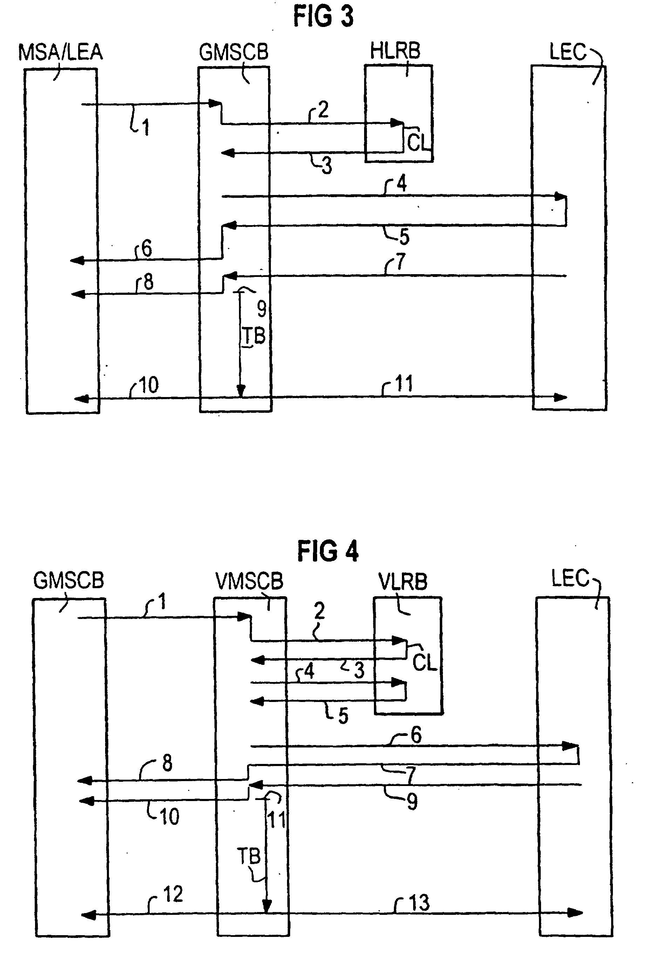

Figur 3 zeigt den Funktionsablauf zur Überwachung der Gebühren bei einem Anruf, der von einem Mobilfunkteilnehmer auf Grund einer für ihn eingerichteten Anrufumlenkung (Call Forwarding) zu einem dritten Teilnehmer - im vorliegenden Beispiel zu einem Festnetzteilnehmer des öffentlichen Fernsprechsystems - umgelenkt wird. Dabei kann zwischen einer unbedingten Anrufumlenkung (Call Forwarding Unconditional), einer Anrufumlenkung bei besetztem Teilnehmer (Call Forwarding on Mobile Subscriber Busy), einer Anrufumlenkung bei keinem Empfang einer Antwort in einer bestimmten Zeit (Call Forwarding on no Reply) und einer Anrufumlenkung bei nicht erreichbarem Teilnehmer (Call Forwarding on Mobile Subscriber not Reachable) unterschieden werden. Der vom Mobilfunkteilnehmer nutzbare Dienst "Anrufumlenkung" wird vom jeweiligen Mobilfunkteilnehmer selbst gesteuert, was bedeutet, daß der Dienst von ihm selbst aktiviert und deaktiviert und eine Zielrufnummer, zu der der Anruf umgeleitet werden soll, eingegeben werden kann. Der Funktionsablauf gemäß Figur 3 gilt für eine unbedingte Anrufumlenkung, eine Anrufumlenkung bei nicht erreichbarem Mobilfunkteilnehmer oder für eine Anrufumlenkung bei besetztem Mobilfunkteilnehmer, wenn der Besetztzustand des Mobilfunkteilnehmers in seiner Heimatdatei festgestellt werden kann. Die von dem Nachrichtenfluß betroffenen Einrichtungen bestehen aus der Mobilstation MSA eines anrufenden Mobilfunkteilnehmers oder aus der mit einer Vermittlungseinrichtung LEA des öffentlichen Fernsprechsystems verbundenen Teilnehmerstation eines anrufenden Festnetzteilnehmers, aus einer Zugangs-Mobilvermittlungsstelle GMSCB und einer Heimatdatei HLRB im Mobilfunksystem des angerufenen Mobilfunkteilnehmers, für den die Anrufumlenkung eingeschaltet ist, sowie aus einer Vermittlungseinrichtung LEC, die für den dritten Teilnehmer, der im vorliegenden Beispiel ein Festnetzteilnehmer ist, im öffentlichen Fernsprechsystem vorgesehen ist. Für den Fall, daß der dritte Teilnehmer ein Mobilfunkteilnehmer ist, wird die Vermittlungseinrichtung LEC von einer Mobilvermittlungsstelle gebildet.

Der an den Mobilfunkteilnehmer gerichtete Anruf ist für die Zugangs-Mobilvermittlungsstelle GMSCB am Empfang einer Nachricht zum Verbindungsaufbau erkennbar (1). Daraufhin frägt die Zugangs-Mobilvermittlungsstelle GMSCB die Heimatdatei HL-RB ab, um Informationen zum Aufbau der Gesprächsverbindung zum angerufenen Mobilfunkteilnehmer zu erhalten (2). Von der Heimatdatei HLRB werden daraufhin Vergebührungsdaten und eine für den Mobilfunkteilnehmer individuell festgelegte Gebührengrenze CL bereitgestellt und zur Zugangs-Mobilvermittlungsstelle GMSCB übertragen. Außerdem führt die Heimatdatei bei Empfang der Anfrage (Interrogation) von der Zugangs-Mobilvermittlungsstelle GMSCB mehrere Prüfprozeduren durch, von denen ein Prüfvorgang die für den angerufenen Mobilfunkteilnehmer eingerichtete Anrufumlenkung betrifft. Für den Fall, daß anhand der für den Mobilfunkteilnehmer gespeicherten Teilnehmerdaten eine unbedingte Anrufumlenkung oder eine Anrufumlenkung bei nicht erreichbarem Mobilfunkteilnehmer - weil beispielsweise der Mobilfunkteilnehmer sich in einem unerlaubten Aufenthaltsgebiet befindet oder keine Nummer einer für den Mobilfunkteilnehmer aktuell zuständigen Besucherdatei verfügbar ist oder die Mobilstation des angerufenen Mobilfunkteilnehmers ausgeschaltet ist - vorliegt, sendet die Heimatdatei HLRB die Zielrufnummer des dritten Teilnehmers, zu dem der Anruf umgelenkt wird, und eine Informaiton über den Grund der Anrufumlenkung zur Zugangs-Mobilvermittlungsstelle GMSCB zurück (3).

Basierend auf der empfangenen Zielrufnummer des dritten Teilnehmers wertet die Zugangs-Mobilvermittlungsstelle GMSCB die eintreffenden Ziffern des neuen Anrufziels aus und überträgt eine Nachricht zum Aufbau der Gesprächsverbindung an die Vermittlungseinrichtung LEC (4). Der weitere Funktionsablauf erfolgt in gleicher Weise wie bei dem Funktionsablauf gemäß Figur 1, der für einen von der Mobilstation MSA abgehenden Anruf zwischen einem anrufenden Mobilfunkteilnehmer und einem angerufenen Festnetzteilnehmer gilt. So wird von der Vermittlungseinrichtung LEC das Anrufsignal, das dem anrufenden Teilnehmer den Aufbau der Gesprächsverbindung zum Zielteilnehmer signalisiert, zur Zugangs-Mobilvermittlungsstelle GMSCB übertragen (5) und von dort zur Mobilstation MSA bzw. zur Vermittlungseinrichtung LEA weitergeleitet (6).

Von der Vermittlungseinrichtung LEC wird schließlich das Betätigen der Festnetzteilnehmerstation des dritten Teilnehmers durch Aussenden einer entsprechenden Nachricht zur Zugangs-Mobilvermittlungsstelle signalisiert, die diese Nachricht an die Mobilstation MSA oder die Vermittlungseinrichtung LEA weiterleitet (8). Mit dem Empfang dieser Nachricht wird von der Zugangs-Mobilvermittlungsstelle GMSCB die Gebührenerfassung gestartet, da eine durchgehende Verbindung zwischen dem anrufenden Mobilfunkteilnehmer oder dem anrufenden Festnetzteilnehmer und dem dritten Teilnehmer, zu dem der Anruf von dem ursprünglich angerufenen Mobilfunkteilnehmer umgelenkt wurde, aufgebaut ist. Mit der Gebührenerfassung wird von der Zugangs-Mobilvermittlungsstelle GMSCB aus den empfangenen Vergebührungsdaten und aus der eintreffenden Gebührengrenze CL eine begrenzte Gesprächszeit TB berechnet und ein Zeitgeber zur Überwachung dieser erlaubten Gesprächsdauer gestartet (9). Für den Fall, daß die Gesprächsverbindung nicht vor Ablauf der begrenzten Gesprächszeit TB vorzeitig beendet wird, löst die Zugangs-Mobilvermittlungsstelle GMSCB den Anruf automatisch aus. Zu diesem Zweck wird von ihr eine Auslösungsnachricht zur Mobilstation MSA oder zur Vermittlungseinrichtung LEA (10) und/oder zur Vermittlungseinrichtung LEC des dritten Teilnehmers ausgesendet (11).

Figur 4 zeigt den Funktionsablauf bei einem umgelenkten Anruf für den Fall, daß zuerst eine Verbindung zu der für den angerufenen Mobilfunkteilnehmer zuständigen Mobilvermittlungsstelle VMSCB aufgebaut werden muß. Dies ist notwendig für die Anrufumlenkung bei besetztem Teilnehmer oder bei nicht rechtzeitiger Antwort oder bei nicht erreichbarem Mobilfunkteilnehmer , wenn die Funkübertragungswege überhäuft sind oder kein Funkruf empfangen wird. Anstelle der Zielrufnummer des dritten Teilnehmers wird von der in Figur 3 dargestellten Heimatdatei, in der die Anrufumlenkung für den angerufenen Mobilfunkteilnehmer registriert ist, eine Wegenummer (Mobile Suscriber Roaming Number) von der die Teilnehmerdaten des Mobilfunkteilnehmers speichernden Besucherdatei VLRB abgerufen und zur Zugangs-Mobilvermittlungsstelle GMSCB übertragen.

Von der Zugangs-Mobilvermittlungsstelle GMSCB wird die empfangene Wegenummer in einer Nachricht zum Verbindungsaufbau an die Mobilvermittlungsstelle VMSCB, die aktuell für den Mobilfunkteilnehmer zuständig ist, ausgesendet (1). Die Mobilvermittlungsstelle VMSCB fordert von der zugehörigen Besucherdatei VLRB die Teilnehmerdaten des Mobilfunkteilnehmers an, um die für ihn registrierten Dienste auf das Vorliegen des Dienstes "Anrufumlenkung" zu überprüfen (2). Nach Übersendung der die Art der Anrufumlenkung definierenden Parameter wird von der Mobilvermittlungsstelle VMSCB die weitere Vorgehensweise zum Aufbau der Gesprächsverbindung festgelegt. Darüber hinaus werden von der Besucherdatei VLRB die Vergebührungsdaten und die Gebührengrenze CL zur Mobilvermittlungsstelle VMSCB übersendet. Abhängig von dem an den in der Besucherdatei VLRB gespeicherten Teilnehmerdaten erkennbaren Status wird von der Mobilvermittlungsstelle VMSCB erneut auf die Besucherdatei VLRB zugegriffen, um die mit dem Dienst "Anrufumlenkung" gekoppelte Zielrufnummer des dritten Teilnehmers zu erhalten (4). Die Zielrufnummer, anhand der der weitere Verbindungsaufbau für die Gesprächsverbindung erforderlich ist, wird daraufhin von der Besucherdatei VLRB zur anfordernden Mobilvermittlungsstelle VMSCB ausgesendet (5).

Der weitere Funktionsablauf erfolgt in gleicher Weise wie beim Funktionsablauf gemäß Figur 3. So wird die Nachricht zum Verbindungsaufbau von der Mobilvermittlungsstelle VMSCB zur Vermittlungseinrichtung LEC ausgesendet (6), von der das Anrufsignal zur Signalisierung der Herstellung einer Gesprächsverbindung zum dritten Teilnehmer an die Mobilvermittlungsstelle VMSCB rückgesendet (7) und von dort zur Zugangs-Mobilvermittlungsstelle GMSCB weitergeleitet wird (8). Die Nachricht, mit der die Aufnahme der Gesprächsverbindung durch den dritten Teilnehmer mitgeteilt wird, empfängt die Mobilvermittlungsstelle VMSCB von der Vermittlungseinrichtung LEC (9) und leitet diese an die Zugangs-Mobilvermittlungsstelle GMSCB weiter (10). Bei Empfang dieser Nachricht beginnt in der Mobilvermittlungsstelle VMSCB die Gebührenerfassung. Gleichzeitig wird ein Zeitgeber zur Überwachung einer von der Mobilvermittlungsstelle VMSCB berechneten begrenzten Gesprächszeit TB gestartet (11). Die erlaubte Gesprächsdauer wird von der Mobilvermittlungsstelle VMSCB anhand der übermittelten Gebührengrenze CL und der mitgeteilten Vergebührungsdaten ermittelt. Bei Ablauf der für den umgelenkten Anruf nach der Anrufumlenkung ermittelten maximalen Gesprächszeit wird der Anruf automatisch dadurch ausgelöst, daß eine Auslösungsnachricht von der Mobilvermittlungsstelle VMSCB zur Zugangs-Mobilvermittlungsstelle GMSCB und/oder zur Vermittlungseinrichtung LEC übertragen wird (12,13).

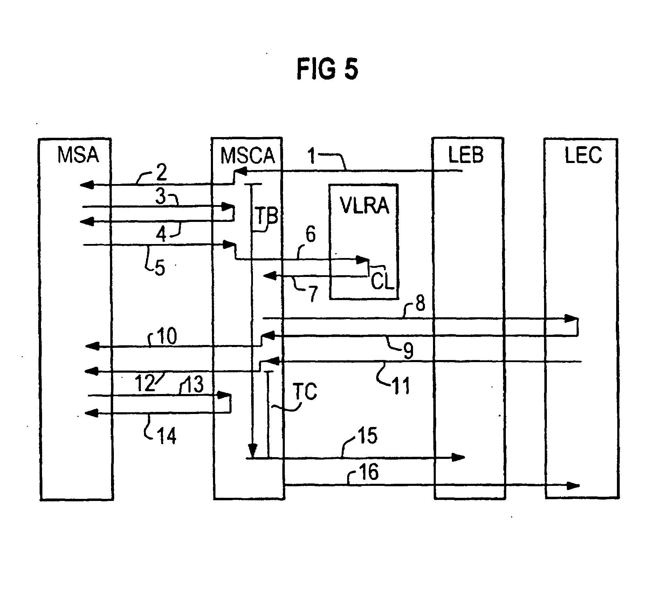

Figur 5 zeigt den Funktionsablauf zur Überwachung der Gebühren bei einem Anruf, der während eines bereits bestehenden Gesprächs beim Mobilfunkteilnehmer eintrifft und auf Grund des Dienstes "Anrufweiterleitung" (Call Transfer) zu einem dritten Teilnehmer weitergeleitet wird. Bei Anrufweiterleitung besteht für den Mobilfunkteilnehmer die Möglichkeit, eine Verbindung zwischen zwei entfernten Teilnehmern aufzubauen und danach die bereits bestehende Verbindung mit einem der beiden entfernten Teilnehmer auszulösen. Die von dem Funktionsablauf betroffenen Einrichtungen bestehen aus der Mobilstation MSA eines Mobilfunkteilnehmers, der für den Mobilfunkteilnehmer zuständigen Mobilvermittlungsstelle MSCA mit zugehöriger Besucherdatei VLRA, der für einen ersten Festnetzteilnehmer vorgesehenen Vermittlungseinrichtung LEB und aus der für einen zweiten Festnetzteilnehmer vorgesehenen Vermittlungseinrichtung LEC. Für den Fall, daß Mobilfunkteilnehmer an Stelle der Festnetzteilnehmer in die Gesprächsverbindung involviert sind, bestehen die Vermittlungseinrichtungen LEB und LEC aus Mobilvermittlungsstellen.

Es liegt bereits eine Gesprächsverbindung zwischen dem Mobilfunkteilnehmer und dem ersten Festnetzteilnehmer vor, deren Gebührenerfassung von der Mobilvermittlungsstelle MSCA bei Empfang der von der Vermittlungseinrichtung LEB ausgesendeten Nachricht, die die durchgängige Verbindung zum Festnetzteilnehmer signalisiert, beginnt(1). Die Nachricht trifft in der Mobilvermittlungsstelle MSCA ein, die zum einen die Nachricht an die Mobilstation MSA des Mobilfunkteilnehmers weiterleitet (2) und zum anderen eine begrenzte Gesprächszeit TB für den ersten Anruf, in den der Mobilfunkteilnehmer involviert ist, berechnet. Die Berechnung der maximal möglichen Gesprächsdauer erfolgt anhand einer Gebührengrenze und anhand von Vergebührungsdaten, die bereits bei dem Aufbau der Gesprächsverbindung zwischen dem Mobilfunkteilnehmer und dem ersten Festnetzteilnehmer von der Besucherdatei VLRA bereitgestellt wurden. Wenn der Mobilfunkteilnehmer den Dienst "Anrufweiterleitung" nutzt, wird über die Mobilstation MSA die bestehende Gesprächsverbindung auf Halten (Call Hold) gesetzt, indem eine entsprechende Nachricht zur Mobilvermittlungsstelle MSCA ausgesendet (3) und eine Antwort, die das Halten der bestehenden Gesprächsverbindung signalisiert, zur Mobilstation MSA rückgesendet wird (4).

Nach dem Anhalten der zwischen dem Mobilfunkteilnehmer und dem ersten Festnetzteilnehmer aufgebauten Gesprächsverbindung wird von der Mobilstation MSA die Nachricht zum Verbindungsaufbau mit einem dritten Teilnehmer zur Mobilvermittlungsstelle MSCA übertragen. Die Mobilvermittlungsstelle MSCA fordert von der zugehörigen Besucherdatei VLRA die Vergebührungsdaten und die Gebührengrenze CL für den weitergeleiteten Anruf an (6), die zur anfordernden Mobilvermittlungsstelle MSCA rückgesendet werden (7). Nach Empfang dieser Daten sendet die Mobilvermittlungsstelle MSCA die Nachricht zum Verbindungsaufbau an die Vermittlungseinrichtung LEC des zweiten Festnetzteilnehmers, von der als Antwort auf die Nachricht das Antwortsignal zur Signalisierung der bestehenden Verbindung mit dem zweiten Festnetzteilnehmer zur Mobilvermittlungsstelle MSCA im Mobilfunksystem rückübertragen wird (9). Das Anrufsignal wird von der Mobilvermittlungsstelle MSCA zur Mobilstation MSA des Mobilfunkteilnehmers weitergeleitet (10). Von der Vermittlungseinrichtung LEC wird außerdem eine Nachricht, die die Aufnahme der Gesprächsverbindung kennzeichnet, zur Mobilvermittlungsstelle MSCA ausgesendet (11) und von dort zur Mobilstation MSA übermittelt (12).

Mit Empfang dieser Nachricht beginnt in der Mobilvermittlungsstelle MSCA die Gebührenerfassung für die Gesprächsverbindung zwischen dem ersten Festnetzteilnehmer und dem zweiten Festnetzteilnehmer, wobei von der Mobilvermittlungsstelle MSCA anhand der übermittelten Vergebührungsdaten und der empfangenen Gebührengrenze CL eine weitere begrenzte Gesprächszeit TC berechnet und ein weiterer Zeitgeber zur Überwachung der begrenzten Gesprächszeit TC gestartet wird. Zur Ausführung des für den Mobilfunkteilnehmer nutzbaren Dienstes "Anrufweiterleitung" wird eine Anforderung von der Mobilstation MSA, die den gewünschten Dienst kennzeichnet, zur Mobilvermittlungsstelle MSCA gesendet (13). Von der Mobilvermittlungsstelle MSCA wird eine Nachricht zur Mobilstation MSA übertragen, die das Ergebnis des benutzten Dienstes enthält und das Auslösen des Anrufs für den Mobilfunkteilnehmer bewirkt (14).

Sobald eine der beiden begrenzten Gesprächszeiten TB, TC abgelaufen ist, erfolgt durch die Mobilvermittlungsstelle MSCA die Übertragung einer Auslösungsnachricht zur Vermittlungseinrichtung LEB (15) und einer weiteren Auslösungsnachricht zur Vermittlungseinrichtung LEC (16), um die neue Gesprächsverbindung zwischen den beiden Festnetzteilnehmern, die auf Grund der Anrufweiterleitung entstanden ist, automatisch auszulösen.

## Patentansprüche

1. Verfahren zur Überwachung der für Anrufe in einem Mobilfunksystem anfallenden Gebühren, das Mobilstationen (MSA, MS-B), Basisstationen und Mobilvermittlungsstellen (MSCA, MSCB, GMSCB, VMSCB) sowie Dateien (VLRA, VLRB, HLRB) zur Speicherung der Teilnehmerdaten von Mobilfunkteilnehmern aufweist,
**dadurch gekennzeichnet,**
**daß** im Mobilfunksystem für jeden einzelnen Anruf eine Gebührengrenze (CL) festgelegt und Vergebührungsdaten bereitgestellt werden, und daß eine begrenzte Gesprächszeit (TA, TB, TC) anhand der Gebührengrenze (CL) und der Vergebührungsdaten für den jeweiligen Anruf berechnet, sowie eine Überwachungsfunktion gestartet wird, durch die nach Ablauf der begrenzten Gesprächszeit (TA, TB, TC) der Anruf automatisch ausgelöst wird.

2. Verfahren nach Anspruch 1,
**dadurch gekennzeichnet,**
**daß** bei einem von der Mobilstation (MSA) abgehenden bzw. in der Mobilstation (MSB) eintreffenden Anruf die Gebührengrenze (CL) von einer die Teilnehmerdaten des anrufenden Mobilfunkteilnehmers bzw. die Teilnehmerdaten des angerufenen Mobilfunkteilnehmers speichernden Besucherdatei (VLRA bzw. VL-RB) bereitgestellt und an die für den Mobilfunkteilnehmer zuständige Mobilvermittlungsstelle (MSCA bzw. MSCB) übertragen wird, die die begrenzte Gesprächszeit (TA bzw. TB) berechnet, die Überwachungsfunktion startet und nach Ablauf der begrenzten Gesprächszeit (TA bzw. TB) eine Auslösungsnachricht aussendet.

3. Verfahren nach Anspruch 1,
**dadurch gekennzeichnet,**
**daß** bei einer für den Mobilfunkteilnehmer eingerichteten Anrufumlenkung die Gebührengrenze (CL) und Umlenkungsdaten von einer die Teilnehmerdaten des Mobilfunkteilnehmers speichernden Besucherdatei (VLRB) bereitgestellt und an die für den Mobilfunkteilnehmer zuständige Mobilvermittlungsstelle (VMSCB) übertragen werden, die die begrenzte Gesprächszeit (TB) berechnet, die Überwachungsfunktion startet und nach Ablauf der begrenzten Gesprächszeit (TB) eine Auslösungsnachricht aussendet.

4. Verfahren nach Anspruch 1,
**dadurch gekennzeichnet,**
**daß** bei einer für den Mobilfunkteilnehmer eingerichteten Anrufumlenkung die Gebührengrenze (CL) und Umlenkungsdaten von einer die Teilnehmerdaten des Mobilfunkteilnehmers speichernden Heimatdatei (HLRB) bereitgestellt und an eine Mobilvermittlungsstelle (GMSCB) übertragen werden, die die begrenzte Gesprächszeit (TB) berechnet, die Überwachungsfunktion startet und nach Ablauf der begrenzten Gesprächszeit (TB) eine Auslösungsnachricht aussendet.

5. Verfahren nach Anspruch 3 oder 4,
**dadurch gekennzeichnet,**
**daß** von der Mobilvermittlungsstelle (GMSCB bzw. VMSCB) die Auslösungsnachricht zu einer Mobilstation (MSA) eines anrufenden Mobilfunkteilnehmers im Mobilfunksystem ausgesendet wird.

6. Verfahren nach Anspruch 3 oder 4,
**dadurch gekennzeichnet,**
**daß** von der Mobilvermittlungsstelle (GMSCB bzw. VMSCB) die Auslösungsnachricht zu einer Festnetzteilnehmerstation eines anrufenden Teilnehmers in einem leitungsgebundenen Kommunikationsnetz ausgesendet wird.

7. Verfahren nach einem der vorhergehenden Ansprüche,
**dadurch gekennzeichnet,**
**daß** bei einer für den Mobilfunkteilnehmer eingerichteten Anrufweiterleitung, bei der vom Mobilfunkteilnehmer während eines bereits aufgenommenen Gesprächs ein Anruf von einem dritten Teilnehmer entgegengenommen oder an einen dritten Teilnehmer gerichtet wird, die Gebührengrenze (CL) von einer die Teilnehmerdaten des Mobilfunkteilnehmers speichernden Besucherdatei (VLRA) bereitgestellt und an die für den Mobilfunkteilnehmer zuständige Mobilvermittlungsstelle (MSCA) übertragen wird, die für den zum dritten Teilnehmer weitergeleiteten Anruf die begrenzte Gesprächszeit (TC) berechnet, die Überwachungsfunktion startet und, sobald eine der begrenzten Gesprächszeiten (TB oder TC) abgelaufen ist, mindestens eine Auslösungsnachricht aussendet.

8. Verfahren nach einem der vorhergehenden Ansprüche,
**dadurch gekennzeichnet,**
**daß** die Auslösungsnachricht von der Mobilvermittlungsstelle (MSCA, GMSCB, VMSCB) zu einer für den vom Anruf betroffenen anderen Teilnehmer vorgesehenen Vermittlungseinrichtung (LEB, LEC) ausgesendet wird.

9. Verfahren nach einem der vorhergehenden Ansprüche,
**dadurch gekennzeichnet,**
**daß** vor Ablauf der begrenzten Gesprächszeit (TA, TB, TC) eine visuelle oder akustische Information über die bevorstehende Auslösung des Anrufs von der Mobilvermittlungsstelle (MSCA, MSCB, GMSCB, VMSCB) ausgesendet wird.

10. Verfahren nach Anspruch 2 und 9,
**dadurch gekennzeichnet,**
**daß** nach Empfang der Information über eine bevorstehende Auslösung des Anrufs von der Mobilstation (MSA, MSB) die begrenzte Gesprächszeit (TA, TB) durch Übertragung einer Kurznachricht an die Mobilvermittlungsstelle (MSCA, MSCB) oder durch Inanspruchnahme eines entsprechenden Dienstes im Mobilfunksystem automatisch verlängert wird.

## Claims

1. Method for monitoring the charges arising for calls in a mobile radio system, featuring Mobile Stations (MSA, MSB), base stations and Mobile Switching Centers (MSCA, MSCB, GMSCB, VMSCB) as well as files (VLRA, VLRB, HLRB) for storing the subscriber data of mobile subscribers,
**characterized in that**
a charge limit (CL) is determined in the mobile radio system for each individual call and billing data is provided and that a limited call time (TA, TB, TC) based on the charge limit (CL) and the billing data is calculated for the relevant call as well as a monitoring function started, through which the call will be automatically cleared down once the limited call time (TA, TB, TC) has elapsed.

2. Method in accordance with Claim 1,
**characterized in that**
for an outgoing call from the Mobile Station (MSA) or incoming call to the Mobile Station (MSB) the charge limit (CL) is provided by a Visitor Location Register (VLRA or VLRB) which stores the subscriber data of the calling mobile subscriber or the subscriber data of the called mobile subscriber and transmits it to the Mobile Switching Center (MSCA or MSCB) responsible for the mobile subscriber which calculates the limited call time (TA or TB), starts the monitoring function and, after the limited call time (TA or TB) has elapsed, sends a cleardown message.

3. Method in accordance with Claim 1,
**characterized in that**
for call forwarding set up for the mobile subscriber, the charge limit (CL) and forwarding data are provided by a Visitor Location Register (VLRB) storing the subscriber data of the mobile subscriber and transmitted to the Mobile Switching Center (VMSCB) responsible for the mobile subscriber, which calculates the limited call time (TB), starts the monitoring function and, after the limited call time (TB) has elapsed, sends a cleardown message.

4. Method in accordance with Claim 1,
**characterized in that**
for call forwarding set up for the mobile subscriber, the charge limit (CL) and forwarding data are provided by a Home Location Register (VLRB) storing the subscriber data of the mobile subscriber and transmitted to a Gateway Mobile Switching Center (GMSCB) which calculates the limited call time (TB), starts the monitoring function and, after the limited call time (TB) has elapsed, sends a cleardown message.

5. Method in accordance with Claim 3 or 4,
**characterized in that**
the cleardown message is sent from the Mobile Switching Center (GMSCB or VMSCB) to a Mobile Station (MSA) of a calling mobile subscriber in the mobile radio system.

6. Method in accordance with Claim 3 or 4,
**characterized in that**,
the cleardown message is sent from the Mobile Switching Center (GMSCB or VMSCB) to a fixed network subscriber station of a calling subscriber in a wired communication network.

7. Method in accordance with one of the previous claims,
**characterized in that**,
for call transfer set up for the mobile subscriber, in which during a call already started by the mobile subscriber a call is accepted from a third subscriber or is directed to a third subscriber, the charge limit (CL) is provided by a Visitor Location Register (VLRA) storing the subscriber data of the mobile radio and is transmitted to the Mobile Switching Center (MSCA) responsible for the mobile subscriber which calculates the limited call time (TC) for the call transferred to the third subscriber, starts a monitoring function, and, as soon as one of the limited call time (TB or TC) has elapsed; sends at least one cleardown message.

8. Method in accordance with one of the previous claims,
**characterized in that**
the cleardown message is sent by the Mobile Switching Center (MSCA, GMSCB, VMSCB) to line equipment (LEB, LEC) provided for at least one other subscriber involved in the call.

9. Method in accordance with one of the previous claims,
**characterized in that**
before the limited call time (TA, TB, TC) elapses, visual or audible information about any impending cleardown of the call is sent by the Mobile Switching Center (MSCA, MSCB, GMSCB, VMSCB).

10. Method in accordance with Claim 2 and 9,
**characterized in that**
after receipt of the information about an impending cleardown of the of the call by the mobile station (MSA, MSB) the limited call time (TA, TB) can be automatically extended by transmission of a short message to the Mobile Switching Center (MSCA, MSCB) or by making use of a corresponding service in the mobile radio system.

## Revendications

1. Méthode de surveillance des frais au titre d'appels dans un système radio mobile, comprenant des stations mobiles (MSA, MSB), des stations de base et des centres de commutation mobiles (MSCA, MSCB, GMSCB, VMSCB) ainsi que des fichiers (VLRA, VLRB, HLRB) pour l'enregistrement des données abonnés d'abonnés radio mobiles,
**caractérisée en ce que**,
dans le système radio mobile, une limite de frais (CL) est établie pour chaque appel individuel et des données de mise en compte des frais sont mises à disposition et **en ce qu'**un temps de communication limité (TA, TB, TC) est calculé à l'aide de la limite de frais (CL) et des données de mise en compte pour chaque appel et une fonction de surveillance est lancée, par laquelle l'appel est automatiquement déclenché après l'expiration du temps de communication limité (TA, TB, TC).

2. Méthode selon la revendication 1,
**caractérisée en ce que**,
dans le cas d'un appel partant de la station mobile (MSA) resp. entrant dans la station mobile (MSB), la limite de frais (CL) est mise à disposition par un fichier de localisation des visiteurs (VLRA resp. VLRB) qui enregistre les données abonnés de l'abonné radio mobile appelant resp. les données abonnés de l'abonné radio mobile appelé et est transmise au centre de commutation mobile (MSCA resp. MSCB) compétent pour l'abonné radio mobile, lequel calcule le temps de communication limité (TA resp. TB), lance la fonction de surveillance et émet un message de déconnexion après l'expiration du temps de communication limité (TA resp. TB).

3. Méthode selon la revendication 1,
**caractérisée en ce que**,
dans le cas d'un renvoi d'appel mis en place pour l'abonné radio mobile, la limite de frais (CL) et les données de renvoi sont mises à disposition par un fichier de localisation des visiteurs (VLRB) qui enregistre les données abonnés de l'abonné radio mobile et sont transmises au centre de commutation mobile (VMSCB) compétent pour l'abonné radio mobile, lequel calcule le temps de communication limité (TB), lance la fonction de surveillance et émet un message de déconnexion après l'expiration du temps de communication limité (TB).

4. Méthode selon la revendication 1,
**caractérisée en ce que**,
dans le cas d'un renvoi d'appel mis en place pour l'abonné radio mobile, la limite de frais (CL) et les données de renvoi sont mises à disposition par un fichier de localisation nominal (HLRB) qui enregistre les données abonnés de l'abonné radio mobile et sont transmises à un centre de commutation mobile (GMSCB), lequel calcule le temps de communication limité (TB), lance la fonction de surveillance et émet un message de déconnexion après l'expiration du temps de communication limité (TB).

5. Méthode selon la revendication 3 ou 4,
**caractérisée en ce que**
le centre de commutation mobile (GMSCB resp. VMSCB) émet, dans le système radio mobile, le message de déconnexion vers une station mobile (MSA) d'un abonné radio mobile appelant.

6. Méthode selon la revendication 3 ou 4,
**caractérisée en ce que**
le centre de commutation mobile (GMSCB resp. VMSCB) émet, dans un réseau de communication filaire, le message de déconnexion vers une station d'abonné du réseau fixe d'un abonné appelant.

7. Méthode selon l'une des revendications précédentes,
**caractérisée en ce que**,
dans le cas d'un transfert d'appel mis en place pour l'abonné radio mobile, tel que, pendant une communication déjà prise par l'abonné radio mobile, un appel est pris par un troisième abonné ou est adressé à un troisième abonné, la limite de frais (CL) est mise à disposition par un fichier de localisation des visiteurs (VLRA) qui enregistre les données abonnés de l'abonné radio mobile et est transmise au centre de commutation mobile (MSCA) compétent pour l'abonné radio mobile, lequel calcule le temps de communication limité (TC) pour l'appel transféré au troisième abonné, lance la fonction de surveillance et émet au moins un message de déconnexion dès que l'un des temps de communication limités (TB ou TC) est expiré.

8. Méthode selon l'une des revendications précédentes,
**caractérisée en ce que**
le message de déconnexion est émis par le centre de commutation mobile (MSCA, GMSCB, VMSCB) vers un dispositif de commutation (LEB, LEC) prévu pour l'autre abonné concerné par l'appel.

9. Méthode selon l'une des revendications précédentes,
**caractérisée en ce**
**qu'**une information visuelle ou acoustique concernant la déconnexion imminente de l'appel est émise par le centre de commutation mobile (MSCA, MSB, GMSCB, VMSCB) avant l'expiration du temps de communication limité (TA, TB, TC).

10. Méthode selon la revendication 2 et 9,
**caractérisée en ce que**,
suite à la réception de l'information concernant une déconnexion imminente de l'appel, la station mobile (MSA, MSB) prolonge automatiquement le temps de communication limité (TA, TB) par la transmission d'un message court au centre de commutation mobile (MSCA, MSCB) ou par le recours à un service correspondant dans le système radio mobile.
